## Europäisches Patentamt

(19) **European Patent Office**

**Office européen des brevets**

(11) Veröffentlichungsnummer: **0 120 449**
**B1**

(12) # EUROPÄISCHE PATENTSCHRIFT

(45) Veröffentlichungstag der Patentschrift:
20.12.89

(51) Int. Cl.⁴: **B 29 C 33/02,** B 29 C 33/10,
B 29 C 39/38

(21) Anmeldenummer: 84103085.1

(22) Anmeldetag: 21.03.84

(54) Geteilte Giessform für Mehrkomponentenkunststoff, insbesondere Polyurethane.

(30) Priorität: 24.03.83 DE 3310677

(43) Veröffentlichungstag der Anmeldung:
03.10.84 Patentblatt 84/40

(45) Bekanntmachung des Hinweises auf die Patenterteilung:
20.12.89 Patentblatt 89/51

(84) Benannte Vertragsstaaten:
BE DE FR GB IT NL SE

(56) Entgegenhaltungen:
US-A- 4 264 293
US-A- 4 314 765

**PATENT JOURNAL (INCLUDING TRADE MARKS AND DESIGNS)(SOUTH AFRICA), Band 3, Nr. 8, August 1970, Seite 271**

(73) Patentinhaber: **ELASTOGRAN POLYURETHANE GMBH,**
**Landwehrweg, D-2844 Lemförde (DE)**

(72) Erfinder: **Wallner, Josef, Brauneckstrasse 2,**
**D-8150 Holzkirchen (DE)**
Erfinder: **Kelterbaum, Manfred, Toelzer Strasse 8,**
**D-8021 Strasslach (DE)**

(74) Vertreter: **Dörries, Hans, Dr., c/o BASF**
**Aktiengesellschaft Carl-Bosch Strasse 38,**
**D-6700 Ludwigshafen (DE)**

## Beschreibung

Die Erfindung betrifft eine geteilte Gießform für Mehrkomponentenkunststoffe mit einem Formoberteil und einem Formunterteil sowie Entlüftungskanälen zwischen Formoberteil und Formunterteil.

Es ist bereits eine Gießform der eingangs genannten Art aus der DE-A-22 64 136 bekannt, bei der die Entlüftungskanäle als dünne Einzelkanäle ausgebildet und in den Bereichen des Formhohlraumes angebracht sind, wo sich während der Formfüllung bzw. während des Steigvorgangs des Schaumes Luft ansammelt. Um diese gezielt abführen zu können, muss die Lage der Entlüftungskanäle dem herzustellenden Formteil angepaßt werden. Häufig muß die Entlüftung aber großflächig ausgeführt sein, um den Abtransport der Luft über weite Bereiche des Formteils sicherzustellen, was über dünne Einzelkanäle schlecht zu verwirklichen ist.

Nachteilig ist auch, daß durch die Entlüftung Schaumstoff austreten kann. Am Formteil entstehen dann sogenannte Schwimmhäute. Diese auch als Austrieb bezeichneten Schwimmhäute müssen nachträglich entfernt werden, was zusätzlichen Arbeitsaufwand erfordert. Außerdem läßt es sich nicht vermeiden, daß durch das Abschneiden des Austriebes an diesen Stellen das Formteil verändert wird, d.h. die geschlossene Schaumhaut eine Verletzung erfährt. Der unter der Haut liegende, in seiner Struktur poröse Schaumstoff, wird sichtbar. Dies macht sich sowohl beim sogenannten «in-mould-coating»-Verfahren als auch bei einer nachträglichen Lackierung der Formteile negativ bemerkbar. Selbst bei nicht lackierten Formteilen sind die Verletzungen der Schaumhaut nicht wünschenswert, da sie sowohl spürbar sind als auch durch ihre rauhe Oberfläche zur rascheren Verschmutzung neigen.

Es war daher Aufgabe der Erfindung, eine Gießform für Mehrkomponentenkunststoffe zu schaffen, die die Herstellung von Formteilen möglichst ohne nachträgliche Bearbeitung derselben gewährleistet und bei der Kunststoffrückstände in den Entlüftungskanälen leicht zu entfernen sind.

Diese Aufgabe wird durch eine Gießform gelöst, wie sie in den Patentansprüchen charakterisiert ist.

Zwar sind Heizeinrichtungen unmittelbar neben Lüftungskanälen an sich bekannt (US-A-4 264 293). Diese Heizeinrichtungen bestehen aus Wärmetauschkanälen, die sich zwischen zwei gegenüberliegenden Stirnflächen von im wesentlichen ebenen Druckplatten erstrecken, von einem Wärmeträgermedium durchströmt werden und die Druckplatten insgesamt gleichmässig erwärmen.

Dadurch, daß lediglich die Entlüftungskanäle heizbar sind, kann im vorliegenden Fall die Reaktionsgeschwindigkeit und/oder das Schäumen des Kunststoffes in diesen Bereichen der Gißform beschleunigt werden. Die durch einen Wärmestoß ausgelöste spontane Reaktion der Kunststoffe führt zu einer Erhöhung der Viskosität des Kunststoffes und es wird das Eintreten der Kunststoffe in die Entlüftungskanäle verhindert. Schaummengen, die gegebenenfalls von der aus dem Formhohlraum ausströmenden Luft mitgerissen werden und in die Entlüftungskanäle gelangen, können durch entsprechend hohe Temperaturen in den Kanälen verdampft werden.

Als Heizeinrichtung sind alle Systeme, wie Hochfrequenz-, Induktions- oder Widerstandsheizungen einsetzbar, sofern diese in kurzer Zeit den Bereich der Entlüftungskanäle auf eine so hohe Temperatur aufheizen können, daß der ankommende Schaum spontan durchreagiert. Auch permanent geheizte Entlüftungsbereiche sind möglich, wenn diese gegenüber dem Formhohlraum so isoliert sind, daß der im Formhohlraum befindliche Schaum durch die hohen Temperaturen im Entlüftungsbereich nicht geschädigt wird.

In der Zeichnung sind Ausführungsbeispiele der Erfindung schematisch dargestellt und im folgenden näher erläutert.

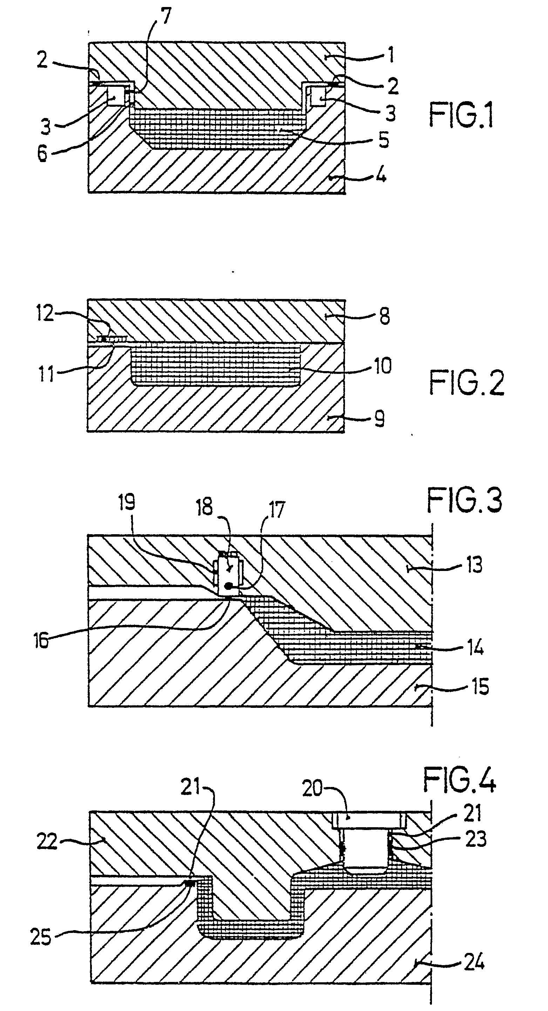

Bei der in Fig. 1 im Längsschnitt dargestellten Gießform sind das Formoberteil mit 1 und das Formunterteil mit 4 bezeichnet. Das Formoberteil wird mittels Distanzelementen 2 in einer definierten Position zum Formunterteil gehalten. Der Formhohlraum 5 ist im wesentlichen im Formunterteil ausgebildet. In der Trennebene der Gießform sind gewinkelt verlaufende Entlüftungskanäle 6 vorgesehen, die sowohl ringförmig als auch als Einzelentlüftungen ausgebildet sein können. Eine Induktionsschleife 3 heizt den unmittelbar an den Formhohlraum angrenzenden Bereich 7 der Entlüftungskanäle so hoch auf, daß der ankommende Kunststoff auspolymerisiert wird und nicht in die Entlüftungskanäle eindringen kann. Die Induktionsschleife wird dabei zeitlich gesteuert. Geringe Schaummengen, die dennoch in die Entlüftung gelangen, werden aufgrund der dort herrschenden Temperaturen verdampft. Um ein ungewolltes Aufheizen der eigentlichen Formenkonturfläche zu vermeiden, wird der Aufheizstoß zeitlich begrenzt.

Gemäß Fig. 2 sind die Entlüftungskanäle 11 der Gießform horizontal zwischen dem Formoberteil 8 und -unterteil 9 angebracht. Das Formunterteil enthält den Formhohlraum 10. Die Heizeinrichtung 12 besteht aus zwei Elektroden und einem quaderförmigen Körper aus Werkstoffen, welche sich hochfrequent aufheizen lassen, beispielsweise Werkstoffen mit geringem dielektrischem Verlustwinkel. Für die Gießform selbst werden dagegen solche Werkstoffe verwendet, die auf eine hochfrequente Heizung nicht ansprechen. Auf diese Weise kann man sehr plötzlich außerordentlich große Wärmemengen in den Entlüftungskanälen erzeugen.

Bei dem Beispiel der Fig. 3 ist ein im Bereich der Entlüftungskanäle 16 im Formoberteil 13 bzw. -unterteil 15 mit Heizpatronen 17 oder Heizbändern versehender Einsatz 18 so in die Gießform eingebaut, daß die Abstrahlfläche des Einsatzes den Entlüftungskanälen zugekehrt ist. Um einen unerwünschten Wärmeübergang zum Formhohlraum 14 zu vermeiden, ist die Heizeinrichtung gegen die Gießform isoliert bzw. der Wärmeübergang zur Gießform durch Luftspalte 19 stark reduziert.

Die in Fig. 4 gezeigte Gießform besitzt sowohl im Formoberteil 22 als auch im Formunterteil 24 Heizeinrichtungen 23 und 25 für die Entlüftungskanäle 21. Die Heizeinrichtung 23 ist an einem senkrecht zur Trennebene der Gießform verschiebbaren Stempel 20 angeordnet, der auch als Entformhilfe dienen kann. Der Stempel eignet sich besonders gut zur Ausbildung von Heizflächen, z.B. durch Aufdampfen von leitfähigem Material auf die den Entlüftungskanälen 21 zugekehrten Stempeloberflächen.

Je nach den Gegebenheiten in der Gießform können eine oder mehrere der vorstehend beschriebenen Heizeinrichtungen benutzt werden, um die Entlüftungskanäle kurzfristig so hoch aufzuheizen, daß ein Schaumeintritt in die Entlüftungskanäle nicht erfolgt bzw. darin befindlicher Schaum durch hohe Temperatur verdampft wird.

## Patentansprüche

1. Geteilte Gießform für Mehrkomponentenkunststoffe mit einem Formoberteil (1, 8, 13, 22) und einem Formunterteil (4, 9, 15, 24) sowie Entlüftungskanälen (6, 11, 16, 21) zwischen Formoberteil und Formunterteil, dadurch gekennzeichnet, daß Heizeinrichtungen (3, 12, 17, 23) unmittelbar neben zumindest einem Teil der Entlüftungskanäle angeordnet sind, wobei die Heizeinrichtungen die Entlüftungskanäle kurzzeitig auf eine ausreichend hohe Temperatur aufheizen, um die Reaktion des Kunststoffes zu beschleunigen und dadurch das Eindringen des Kunststoffes in die Entlüftungskanäle zu verhindern.

2. Geteilte Gießform nach Anspruch 1, dadurch gekennzeichnet, daß eine Heizeinrichtung (23) an einem in den Entlüftungskanal hineinragenden Stempel (20) angeordnet ist.

3. Geteilte Gießform nach den Ansprüchen 1 und 2, dadurch gekennzeichnet, daß die Entlüftungskanäle (6, 11, 16, 21) zumindest teilweise thermisch isoliert sind.

4. Geteilte Gießform nach Ansprüchen 1 bis 3, dadurch gekennzeichnet, dass die Entlüftungskanäle (6) gewinkelt ausgebildet sind.

## Claims

1. A split mold for multi-component plastics having an upper mold half (1, 8, 13, 22) and a lower mold half (4, 9, 15, 24) and venting channels (6, 11, 16, 21) between the upper mold half and the lower mold half, wherein heating devices (3, 12, 17, 23) are provided directly adjacent to at least some of the venting channels, the heating devices heating the venting channels in a short time to a sufficiently high temperature in order to accelerate the reaction of the plastic and thereby prevent the plastic penetrating into the venting channels.

2. A split mold as claimed in claim 1, wherein a heating device (23) is provided on a ram (20) protruding into the venting channel.

3. A split mold as claimed in either of claims 1 and 2, wherein the venting channels (6, 11, 16, 21) are partially or completely thermally insulated.

4. A split mold as claimed in any of claims 1 to 3, wherein the venting channels (6) are angled.

## Revendications

1. Moule de coulée en deux parties pour matière plastique multicomposante, à partie de moule supérieure (1, 8, 13, 22) et partie de moule inférieure (4, 9, 15, 24) ainsi qu'à canaux d'évent (6, 11, 16, 21) entre partie de moule supérieure et partie de moule inférieure, caractérisé par le fait que des moyens de chauffage (3, 12, 17, 23) sont disposés directement au voisinage d'au moins une partie des canaux d'évent, les moyens de chauffage portant rapidement les canaux d'évent à une température suffisamment élevée pour accélérer la réaction de la matière plastique et empêcher de ce fait la pénétration de la matière plastique dans les canaux d'évent.

2. Moule de coulée en deux parties selon la revendication 1, caractérisé par le fait qu'un moyen de chauffage (23) est disposé contre un piston (20) faisant saillie dans le canal d'évent.

3. Moule de coulée en deux parties selon les revendications 1 et 2, caractérisé par le fait que les canaux d'évent (6, 11, 16, 21) sont isolés thermiquement, au moins partiellement.

4. Moule de coulée en deux parties selon les revendications 1 à 3, caractérisé par le fait que les canaux d'évent (6) sont coudés.

**FIG.1**

**FIG.2**

**FIG.3**

**FIG.4**